# EUROPÄISCHE PATENTSCHRIFT

(11) **EP 4 367 413 B1**
(45) Veröffentlichungstag und Bekanntmachung des Hinweises auf die Patenterteilung: **05.08.2026**
(21) Anmeldenummer: 22731478.8
(22) Anmeldetag: 09.06.2022
(51) Int. Cl.: F16C 33/46

(54) **WÄLZLAGERKÄFIG**
ROLLING BEARING CAGE
CAGE DE ROULEMENT

(30) Priorität: 05.07.2021 DE 102021117246
(43) Veröffentlichungstag der Anmeldung: 15.05.2024
(73) Patentinhaber: Schaeffler Technologies AG & Co. KG, 91074 Herzogenaurach (DE)
(72) Erfinder: LEHMANN, Torsten, 97422 Schweinfurt (DE); VOLL, Martin, 97424 Schweinfurt (DE); STOPPEL, Erika, 97080 Niederlauer (DE)
(74) Vertreter: Schaeffler Technologies
(86) Internationale Anmeldenummer: PCT/DE2022/100433
(87) Internationale Veröffentlichungsnummer: WO 2023/280339

(56) Entgegenhaltungen:
- DE-B4- 112009 001 651
- JP-A- 2000 320 558
- US-A- 3 784 268

## Beschreibung

### Gebiet der Erfindung

Die Erfindung betrifft einen Wälzlagerkäfig mit einem ersten Seitenring und einem zweiten Seitenring, wobei die beiden Seitenringe in axialer Richtung beabstandet zueinander angeordnet sind und wobei sich zwischen den beiden Seitenringen eine Anzahl Stege erstrecken, um eine der Zahl der Stege entsprechende Anzahl an Aufnahmetaschen für Wälzkörper zu bilden, wobei an der radial innenliegenden Oberfläche des Käfigs im axialen Bereich der beiden Seitenringe an den Seitenringen und/oder an den Stegen unter einem Winkel zur axialen Richtung verlaufende erste und zweite Schrägen ausgebildet sind, wobei sich der Radius der Oberfläche der Schrägen zur axialen Mitte des Käfigs hin verkleinert, wobei an der radial außenliegenden Oberfläche des Käfigs im axialen Bereich einer der beiden Seitenringe an den Seitenringen und/oder an den Stegen unter einem Winkel zur axialen Richtung verlaufende dritte Schrägen ausgebildet sind und wobei die Schrägen eine Erstreckung in axiale Richtung haben, die zwischen 10 % und 20 %, vorzugsweise zwischen 12 % und 16 %, der Breite des Käfigs beträgt.

### Hintergrund der Erfindung

Einen Wälzlagerkäfig mit den Merkmalen des Oberbegriffs von Anspruch 1 offenbart die US 3 784 268 A. Im einen axialen Endbereich ist hier eine Dichtung angesetzt, welche über eine Schnappverbindung mit dem Käfig verbunden ist. Durch die vorhandene Dichtung ist ein Einspritzen von Schmiermittel in den Bereich der Wälzkörper nicht möglich.

Ansonsten wird auf die DE 10 2010 009 331 A1 hingewiesen, in der ein Käfig für ein Zylinderrollenlager gezeigt wird, der aus zwei axial beanstandeten Seitenring besteht, die über Stege miteinander verbunden sind. Einen Kegelrollenlagerkäfig beschreibt die DE 11 2009 001 651 B4.

Die JP 2000 320558 A offenbart einen Wälzlagerkäfig der eingangs genannten Art.

Insbesondere bei Anwendungen, bei denen das Lager sehr schnell drehen muss, bestehen bei den vorbekannten Käfigen noch Nachteile mit Blick auf eine gute Schmierbarkeit. Ferner ist die Möglichkeit beschränkt, was die Stelle anbelangt, an der Öl ins Innere des Lagers, d.h. in den Bereich der Wälzkörper, eingespritzt werden kann. Teils ist dies nur zwischen dem Außenring und dem Käfig möglich.

Weiterhin ist teilweise auch der Fertigungsprozess des Käfigs aufwendig und teuer. Das gilt insbesondere dann, wenn der Käfig aus einem Ringteil durch spanende Bearbeitung hergestellt werden soll.

### Aufgabe der Erfindung

Der Erfindung liegt daher die Aufgabe zugrunde, einen Käfig für ein Wälzlager, insbesondere für ein Zylinderrollenlager, bereitzustellen, der sich besonders gut für den Einsatz bei hohen Drehzahlen eignet. Die Schmierung des Lagers soll durch die Gestaltung des Käfigs begünstigt werden. Dabei soll es auch möglich sein, eine größere Auswahl betreffend den Ort zu haben, an dem das Öl ins Innere des Lagers eingespritzt wird. Darüber hinaus wird eine günstige und preiswerte Herstellungsmöglichkeit für den Käfig angestrebt.

### Beschreibung der Erfindung

Die Lösung dieser Aufgabe durch die Erfindung sieht vor, dass die erste Schräge im Bereich des ersten Seitenrings unter einem Winkel zwischen 8° und 20° verläuft und die zweite Schräge im Bereich des zweiten Seitenrings unter einem Winkel zwischen 35° und 55° verläuft. Der erste Seitenring weist dabei bevorzugt eine geringere radiale Erstreckung auf als der zweite Seitenring.

Mit der oben genannten Spezifikation bezüglich der ersten und zweiten Schrägen ist gemeint, dass die Schrägen im Bereich der beiden Seitenringe gegensinnig gerichtet sind und zur Lagermitte hin im Durchmesser kleiner werden.

Der Käfig ist besonders bevorzugt als Spritzgießformteil ausgebildet. Er besteht dabei bevorzugt aus Polyetheretherketon (PEEK).

Weiterhin kann vorgesehen werden, dass an der radial außenliegenden Oberfläche des Käfigs im axialen Bereich einer der beiden Seitenringe an den Seitenringen und/oder an den Stegen unter einem Winkel zur axialen Richtung verlaufende weitere vierte Schrägen ausgebildet sind.

Alle genannten Schrägen sind bevorzugt als ebene Abflachungen an den Seitenringen bzw. an den Stegen ausgebildet, die im Radialschnitt unter einem Winkel zur axialen Richtung des Käfigs verlaufen.

Die dritten und vierten Schrägen sind bevorzugt - im Gegensatz zu den ersten und zweiten Schrägen - gleichsinnig an den Seitenringen und/oder an den Stegen angeordnet.

Wie bereits erwähnt, sieht eine Fortbildung vor, dass der erste Seitenring eine geringere radiale Erstreckung aufweist als der zweite Seitenring.

Der Käfig ist bevorzugt Bestandteil eines Zylinderrollenlagers.

Der vorgeschlagene Käfig eignet sich in besonders vorteilhafter Weise für Zylinderrollenlager, die im Betrieb sehr schnell drehen. Ein besonders bevorzugter Anwendungsfall ist eine Spindellagerung, bei der Zylinderrollenlager mit dem beschriebenen Käfig eingesetzt werden.

Dabei ist bevorzugt eine Öleinspritzung in den Bereich der Wälzkörper vorgesehen, um optimale Betriebsverhältnisse aufrecht zu erhalten.

Ein Zylinderrollenlager, welches mit dem beschriebenen Käfig versehen ist, kann mit hohen Drehzahlen betrieben werden, wobei eine hohe Präzision und Robustheit gewährleistet sind.

Wird der Käfig, wie bevorzugt vorgesehen, durch Spritzgießen hergestellt, ist eine schnelle und kostengünstige Fertigung möglich. Die genannten Schrägen begünstigen den Herstellungsprozess. Bislang werden, wie oben bereits erwähnt, Käfige der gattungsgemäßen Art häufig durch spanende Bearbeitung (Drehen und Fräsen) aus einem ringförmigen Rohling hergestellt, der aus **PEEK** besteht. Dieser Bearbeitungsprozess erfordert eine hohe Taktzeit und ist damit kostenintensiv. Durch das Spritzgießen werden diese Nachteile beseitigt, wobei die vorgesehenen Schrägen insbesondere für eine vorteilhafte Entformung des Käfigs aus dem Spritzgießwerkzeug sorgen.

Durch das vorgeschlagene Konzept kann eine Drehzahlerhöhung gegenüber vorbekannten Lösungen von bis zu 20 % erreicht werden.

Ferner wird es in vorteilhafter Weise möglich, beim Einspritzen des Schmierstoffs größere Freiheitsgrade zur Verfügung zu haben. Während es bislang häufig nur möglich war, den Schmierstoff zwischen dem Innenring und dem Käfig oder zwischen dem Außenring und dem Käfig einzuspritzen, bestehen nunmehr durch die erfindungsgemäße Ausgestaltung durch die beschriebenen Schrägen Einspritzmöglichkeiten sowohl im Bereich des Außenrings als auch im Bereich des Innenrings. Dabei ist auch eine Schrägeinspritzung insbesondere am Innenring möglich. Die Schrägen dienen als Reflexion- bzw. Leitflächen und begünstigen das Einbringen des Schmierstoffs (Öl) in das Innere des Lagers, d. h. zu den Wälzkörpern.

Die Teilkreise für die Einspritzung ändern sich im Vergleich zur eingangs genannten vorbekannten Lösung entsprechend. Insbesondere wird eine Schrägeinspritzung bei einem relativ großen axialen Verschiebeweg möglich. Die erfindungsgemäß vorgesehenen Schrägen gewährleisten somit ein höheres Maß an Flexibilität bei der Einspritzung von Schmiermittel (Öl).

### Kurze Beschreibung der Zeichnungen

Eine bevorzugte Ausführungsform des erfindungsgemäß ausgebildeten Wälzlagerkäfigs wird nachfolgend unter Bezugnahme auf die beigefügten Zeichnungen näher erläutert. Dabei zeigen:
- Figur 1: im Radialschnitt ein Zylinderrollenlager mit einem erfindungsgemäß ausgestalteten Käfig,
- Figur 2: den Radialschnitt durch den Käfig gemäß Figur 1, wobei ein Schnitt im Bereich einer Aufnahmetasche dargestellt ist, und
- Figur 3: in perspektivischer Darstellung einen Teil des Käfigs.

### Ausführliche Beschreibung der Zeichnungen

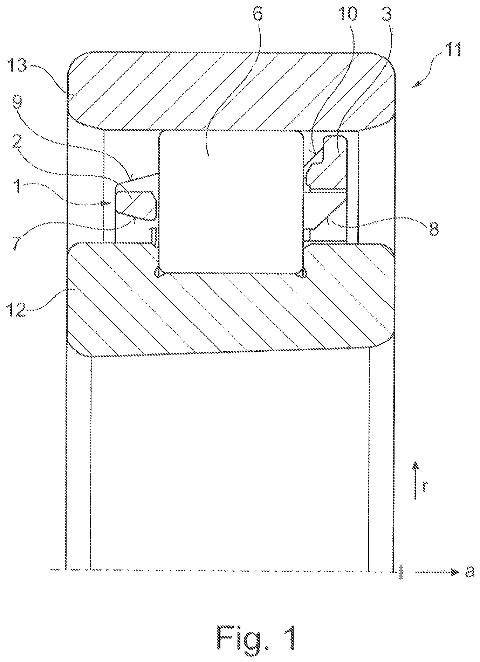

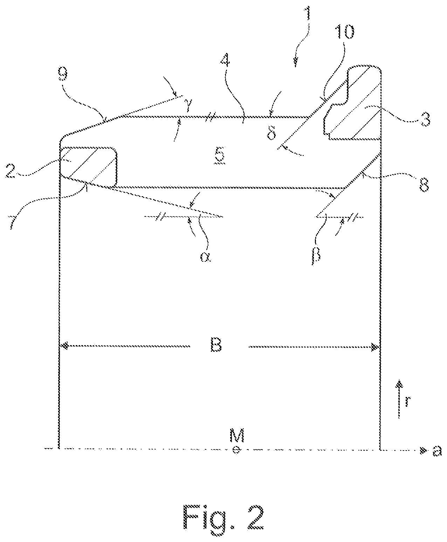

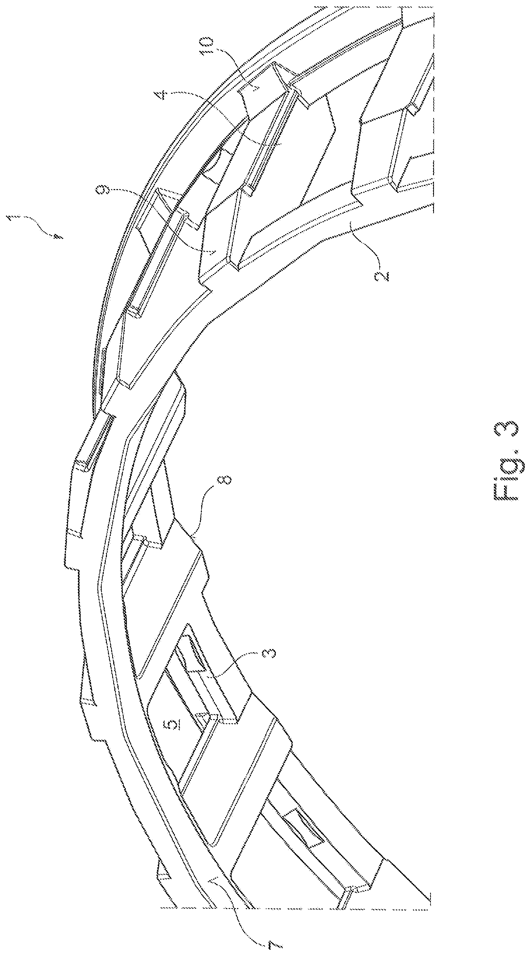

In Figur 1 ist ein Zylinderrollenlager 11 im Radialschnitt dargestellt, welches einen Innenring 12 und einen Außenring 13 aufweist, zwischen denen Zylinderrollen 6 angeordnet sind. Die Zylinderrollen 6 werden von einem Käfig 1 geführt. Der Käfig 1 hat eine besondere Ausgestaltung, wie sich aus der Zusammenschau mit den weiteren Figuren 2 und 3 ergibt.

In zunächst bekannter Weise hat der Käfig 1 einen ersten Seitenring 2 und einen zweiten Seitenring 3, die in axialer Richtung a zueinander beabstandet angeordnet sind. Die Verbindung zwischen den beiden Seitenringen 2 und 3 wird durch Stege 4 bewerkstelligt. Dabei begrenzen die Seitenringe 2 und 3 sowie zwei benachbarte Stege 4 eine Aufnahmetasche 5 für eine Zylinderrolle 6.

Wie sich aus den Figuren weiter ergibt, sind an der radial innenliegenden Oberfläche des Käfigs 1, und zwar im axialen Bereich der beiden Seitenringe 2 bzw. 3, an den Seitenringen 2, 3 bzw. an den Stegen 4 Schrägen vorgesehen, und zwar eine erste Schräge 7 und eine zweite Schräge 8. Die erste Schräge 7 ist dabei am ersten Seitenring 2 angeordnet und verläuft über den gesamten Umfang des Seitenrings 2. Die zweite Schräge 8 ist jeweils an den Stegen 4 angeordnet. Die erste Schräge 7 und die zweite Schräge 8 sind dabei zueinander gegensinnig ausgerichtet, d. h. zur axialen Mitte M des Käfigs 1 fällt der Radius der Oberfläche der jeweiligen Schräge ab.

Wie insbesondere aus Figur 2 ersichtlich ist, ist dabei die radiale Erstreckung (in Richtung r) des ersten Seitenrings 2 geringer als diejenige des zweiten Seitenrings 3. In Kombination mit den beschriebenen ersten und zweiten Schrägen 7 und 8 ergibt sich damit eine günstige Einspritzmöglichkeit für Schmieröl in den Bereich der Aufnahmetaschen 5.

Im Ausführungsbeispiel liegt der Winkel α der ersten Schräge 7 bei ca. 13°. Der Winkel β der zweiten Schräge 8 liegt bei ca. 45°.

Die Erstreckung der ersten und zweiten Schräge 7, 8 in axiale Richtung a liegt im Ausführungsbeispiel etwa bei 12 % bis 15 % der Breite B des Käfigs 1.

Wie weiter zu erkennen ist, sind auch im radial außenliegenden Bereich der Seitenringe 2, 3 bzw. der Stege 4 weitere Schrägen angeordnet, nämlich eine dritte Schräge 9 sowie eine vierte Schräge 10. Dabei verläuft die dritte Schräge 9 bevorzugt unter einem Winkel γ zur axialen Richtung a, der zwischen 15° und 25° beträgt. Indes verläuft die vierte Schräge 10 bevorzugt unter einem Winkel δ zur axialen Richtung a, der zwischen 35° und 55° beträgt. Wie sich aus Figur 2 auch ergibt, sind die ersten Schrägen 7 und die dritten Schrägen 9 so orientiert, dass sich im Radialschnitt des Käfigs, wie er in Figur 2 dargestellt ist, ein spitz bzw. pfeilförmig zulaufender axialer Endbereich des Seitenrings 2 ausgebildet wird.

Der beschriebene Käfig kommt bevorzugt in einem Zylinderrollenlager zum Einsatz, welches für den hochdrehenden Einsatz in einer Spindel vorgesehen ist.

Durch die Anordnung der beschriebenen Schrägen wird eine flexible Einspritzung von Schmieröl ins Innere des Lagers, d. h. in den Bereich der Aufnahmetaschen 5 bzw. der Wälzkörper 6, möglich.

### Bezugszeichenliste

- 1: Wälzlagerkäfig (Zylinderrollenlagerkäfig)
- 2: erster Seitenring
- 3: zweiter Seitenring
- 4: Steg
- 5: Aufnahmetasche
- 6: Wälzkörper (Zylinderrolle)
- 7: erste Schräge
- 8: zweite Schräge
- 9: dritte Schräge
- 10: vierte Schräge
- 11: Wälzlager (Zylinderrollenlager)
- 12: Innenring
- 13: Außenring

- a: axiale Richtung
- r: radiale Richtung
- M: axiale Mitte des Käfigs
- B: Breite des Käfigs

- α: Winkel der ersten Schräge 7
- β: Winkel der zweiten Schräge 8
- γ: Winkel der dritten Schräge
- δ: Winkel der vierten Schräge

## Patentansprüche

1. Wälzlagerkäfig (1) mit einem ersten Seitenring (2) und einem in axialer Richtung (a) dazu beabstandeten zweiten Seitenring (3), zwischen denen sich Stege (4) erstrecken, die eine Anzahl der Stege (4) entsprechende Anzahl an Aufnahmetaschen (5) für Wälzkörper (6) bilden, wobei an der radial innenliegenden Oberfläche des Käfigs (1) im axialen Bereich der Seitenringe (2, 3) an den Seitenringen (2, 3) und/oder an den Stegen (4) unter einem Winkel (α, β) zur axialen Richtung (a) verlaufende erste und zweite Schrägen (7, 8) ausgebildet sind, wobei sich der Radius (r) der Oberfläche der Schrägen (7, 8) zur axialen Mitte (M) des Käfigs (1) hin verkleinert und wobei an der radial außenliegenden Oberfläche des Käfigs (1) im axialen Bereich einer der Seitenringe (2, 3) an den Seitenringen (2, 3) und/oder an den Stegen (4) unter einem Winkel (γ) zur axialen Richtung (a) verlaufende dritte Schrägen (9) ausgebildet sind, **dadurch gekennzeichnet, dass** die Schrägen (7, 8, 9) eine Erstreckung in axiale Richtung (a) haben, die zwischen 10 % und 20 %, vorzugsweise zwischen 12 % und 16 %, der Breite (B) des Käfigs (1) beträgt, wobei die erste Schräge (7) im Bereich des ersten Seitenrings (2) unter einem Winkel (α) zwischen 8° und 20° verläuft und die zweite Schräge (8) im Bereich des zweiten Seitenrings (3) unter einem Winkel (β) zwischen 35° und 55° verläuft.

2. Käfig (1) nach Anspruch 1, **dadurch gekennzeichnet, dass** er als Spritzgießformteil ausgebildet ist.

3. Käfig (1) nach Anspruch 1 oder 2, **dadurch gekennzeichnet, dass** er aus Polyetheretherketon (PEEK) besteht.

4. Käfig (1) nach einem der Ansprüche 1 bis 3, **dadurch gekennzeichnet, dass** an der radial außenliegenden Oberfläche des Käfigs (1) im axialen Bereich einer der beiden Seitenringe (2, 3) an den Seitenringen (2, 3) und/oder an den Stegen (4) unter einem Winkel (δ) zur axialen Richtung (a) verlaufende weitere vierte Schrägen (10) ausgebildet sind.

5. Käfig (1) nach Anspruch 4, **dadurch gekennzeichnet, dass** die dritten und vierten Schrägen (9, 10) gleichsinnig an den Seitenringen (2, 3) und/oder an den Stegen (4) angeordnet sind.

6. Käfig (1) nach einem der Ansprüche 1 bis 5, **dadurch gekennzeichnet, dass** der erste Seitenring (2) eine geringere radiale Erstreckung aufweist als der zweite Seitenring (3).

7. Käfig (1) nach einem der Ansprüche 1 bis 6, **dadurch gekennzeichnet, dass** er ein Zylinderrollenlagerkäfig ist.

## Claims

1. A rolling bearing cage (1) having a first side ring (2) and a second side ring (3) spaced in the axial direction (a) therefrom, between which webs (4) extend, which form a number of receiving pockets (5) for rolling elements (6) corresponding to the number of webs (4), wherein first and second inclines (7, 8) are formed on the radially inner surface of the cage (1) in the axial region of the side rings (2, 3) on the side rings (2, 3) and/or on the webs (4), extending at an angle (α, β) to the axial direction (a), wherein the radius (r) of the surface of the inclines (7, 8) decreases towards the axial centre (M) of the cage (1) and wherein third inclines (9) are formed on the radially outer surface of the cage (1) in the axial region of one of the side rings (2, 3) on the side rings (2, 3) and/or on the webs (4), extending at an angle (γ) to the axial direction (a),
**characterised in that**
the inclines (7, 8, 9) have an extension in the axial direction (a), which is between 10% and 20%, preferably between 12% and 16%, of the width (B) of the cage (1), wherein the first incline (7) in the region of the first side ring (2) extends at an angle (α) between 8° and 20° and the second incline (8) in the region of the second side ring (3) extends at an angle (β) between 35° and 55°.

2. The cage (1) according to claim 1, **characterised in that** it is designed as an injection-moulded part.

3. The cage (1) according to claim 1 or 2, **characterized in that** it is made of polyetheretherketone (PEEK).

4. The cage (1) according to any one of claims 1 to 3, **characterised in that** further fourth inclines (10) are formed on the radially outer surface of the cage (1) in the axial region of one of the two side rings (2, 3) on the side rings (2, 3) and/or on the webs (4), extending at an angle (δ) to the axial direction (a).

5. The cage (1) according to claim 4, **characterized in that** the third and fourth inclines (9, 10) are arranged in the same direction on the side rings (2, 3) and/or on the webs (4).

6. The cage (1) according to any one of claims 1 to 5, **characterized in that** the first side ring (2) has a smaller radial extension than the second side ring (3).

7. The cage (1) according to any one of claims 1 to 6, **characterised in that** it is a cylindrical roller bearing cage.

## Revendications

1. Cage de roulement (1) comportant une première bague latérale (2) et une seconde bague latérale (3) espacée de celle-ci dans la direction axiale (a), entre lesquelles s'étendent des nervures (4), qui forment un nombre de poches réceptrices (5) pour des éléments roulants (6) correspondant au nombre de nervures (4), sur la surface interne radiale de la cage (1), dans la région axiale des bagues latérales (2, 3), des première et seconde pentes (7, 8) étant formées sur les bagues latérales (2, 3) et/ou sur les nervures (4), formant un angle (α, β) avec la direction axiale (a), le rayon (r) de la surface des pentes (7, 8) diminuant vers le centre axial (M) de la cage (1) et , sur la surface externe radiale de la cage (1), dans la région axiale de l'une des bagues latérales (2, 3), des troisièmes pentes (9) étant formées sur les bagues latérales (2, 3) et/ou sur les nervures (4), formant un angle (γ) avec la direction axiale (a), **caractérisée en ce que**
les pentes (7, 8, 9) ont une extension dans la direction axiale (a) qui est comprise entre 10 % et 20 %, de préférence entre 12 % et 16 %, de la largeur (B) de la cage (1), la première pente (7) dans la région de la première bague latérale (2) courant à un angle (α) compris entre 8° et 20° et la deuxième pente (8) dans la région de la seconde bague latérale (3) courant à un angle (β) compris entre 35° et 55°.

2. Cage (1) selon la revendication 1, **caractérisée en ce qu'**elle est conçue comme une pièce moulée par injection.

3. Cage (1) selon la revendication 1 ou 2, **caractérisée en ce qu'**elle est fabriquée en polyétheréthercétone (PEEK).

4. Cage (1) selon l'une des revendications 1 à 3, **caractérisée en ce que** des quatrièmes pentes (10) supplémentaires formant un angle (δ) par rapport à la direction axiale (a) sont formées sur la surface externe radiale de la cage (1) dans la région axiale de l'une des deux bagues latérales (2, 3) sur les bagues latérales (2, 3) et/ou sur les nervures (4).

5. Cage (1) selon la revendication 4, **caractérisée en ce que** les troisièmes et quatrièmes pentes (9, 10) sont agencées dans le même sens sur les bagues latérales (2, 3) et/ou sur les nervures (4).

6. Cage (1) selon l'une des revendications 1 à 5, **caractérisée en ce que** la première bague latérale (2) présente une extension radiale inférieure à celle de la seconde bague latérale (3).

7. Cage (1) selon l'une des revendications 1 à 6, **caractérisée en ce qu'**il s'agit d'une cage de roulement à rouleaux cylindriques.
